# EUROPÄISCHE PATENTANMELDUNG

(11) **EP 3 291 152 A1**
(43) Veröffentlichungstag der Anmeldung: **07.03.2018**
(21) Anmeldenummer: 16186127.3
(22) Anmeldetag: 29.08.2016
(51) Int. Cl.: G06Q 10/08, G01M 17/10, G06Q 50/28, B61K 9/12, B61L 1/06, G01M 13/04

(54) **ÜBERWACHUNG EINES TRANSPORTWEGES**

(71) Anmelder: Siemens Aktiengesellschaft, 80333 München (DE)
(72) Erfinder: Zellmann, Heinz-Joachim, 91346 Wiesenttal (DE); Dolfus, Stephan, 91336 Heroldsbach (DE)

(57) **Zusammenfassung**

Die Erfindung betrifft einen Transportweg (1) für eine Transporteinheit (11,12,13,14,15,16), welche ein Lager (17,18) aufweist, wobei der Transportweg (1) einen ersten Sensor (31) zur Überwachung des Lagers (17,18) aufweist. Der Transportweg weist eine erste Überwachungsstrecke (5) auf. Über einen Trigger (35,36) erfolgt der Start und/oder das Ende einer Speicherung der Sensordaten des ersten Sensors. Die Sensordaten des ersten Sensors (31) werden verarbeitet und es wird ein Wert (43,44,45) ermittelt, welcher vom Verschleiß der Transporteinheit (11,12,13,14,15,16) abhängt.

## Beschreibung

Auf einem Transportweg kann sich eine Transporteinheit fortbewegen. Ein Transportweg ist beispielsweise eine Schiene, eine Fahrbahn oder dergleichen auf oder unter welcher sich die Transporteinheit fortbewegen kann. Zur Fortbewegung weist die Transporteinheit beispielsweise einen Drehkörper, wie z.B. ein Rad, oder eine Kufe auf.

Um eine hohe Verfügbarkeit des Transportweges und/oder der Transporteinheit zu gewähren, bzw. um einen Mangel an dem Transportweg und/oder der Transporteinheit zu erkennen kann eine Überwachung des Transportweges und/oder der Transporteinheit vorgesehen sein.

Eine Aufgabe der Erfindung ist es, eine Überwachung für ein Transportsystem mit einem Transportweg und einer Transporteinheit zur Verfügung zu stellen.

Eine Lösung der Aufgabe gelingt bei einem Transportweg nach Anspruch 1 und bei einem Verfahren nach Anspruch 14. Ausgestaltungen der Erfindung ergeben sich unter anderem nach den Ansprüchen 2 bis 13 und 15 bis 23.

Bei einem Transportweg für eine Transporteinheit, welche ein Lager aufweist, weist der Transportweg einen ersten Sensor zur Überwachung des Lagers der Transporteinheit auf. Durch eine Auswertung der Sensorsignale kann die Transporteinheit beispielsweise auf einen Schaden am Lager überwacht werden. Damit ist ein indirekt messendes Condition-Monitoring-System beispielsweise für die Verschleißerkennung in der Transport-branche angegeben. Der Transportweg ist beispielsweise für den Transport von Koffern, Briefen, Päckchen, Fertigwaren, Halbzeugen, etc. vorgesehen. Bei einer Transporteinheit, wie beispielsweise einem Transportwagen, einer Transportgondel oder dergleichen, können aufgrund von übermäßigem Verschleiß, Wälzlager von Rädern, mit der Zeit ausfallen. Der Ausfall einer Transporteinheit kann zu einem Stillstand eines gesamten Abschnitts eines Transportweges führen, da eine Vielzahl von Transporteinheiten hintereinander angeordnet sein können bzw. hintereinander Abfolgen können. Durch eine Überwachung kann ein Ausfall vorhergesehen oder automatisch so rechtzeitig erkannt werden, dass Gegenmaßnahmen geplant werden können, um beispielsweise Produktionsausfallzeiten zu minimieren und/ oder eine Anlagenverfügbarkeit zu erhöhen.

Zusätzlich zur indirekten Überwachung des Lagers über den Transportweg kann zur Lagerüberwachung ein Schwingungssensor direkt an dem Lagergehäuse installiert werden, also direkt an der Transporteinheit. Anwendungsfälle in der Logistikbranche setzen oftmals sehr viele Transporteinheiten ein, die auf einem Schienensystem (ein Beispiel für einen Transportweg) laufen. Ohne eine indirekte Überwachung über einen Sensor am Transportweg benötigt jede Transporteinheit zur Überwachung eine eigene Sensorik. Die direkte Schwingungsmessung auf einer solchen Transporteinheit setzt vorzugsweise eine drahtlose Übertragung der Daten an eine übergeordnete Auswerteeinheit voraus. Dies kann mit hohen Kosten für die Sensorik und Erfassung verbunden sein. Befindet sich der Sensor zur Überwachung der Transporteinheit lediglich am Transportweg, können eine Vielzahl von Sensoren zur Überwachung, insbesondere von Lagern der Transporteinheit eingespart werden. Das Messsystem zur Überwachung von Transporteinheiten muss nicht direkt an der Transporteinheit angebracht sein, so dass z.B. keine direkte Messung an einer Lagerstelle erfolgt, sondern eine indirekte Messung. Der Sensor oder die Sensoren werden beispielsweise an einer Schiene befestigt, welche den Transportweg darstellt und auf der bzw. unter der sich die Transporteinheiten fortbewegen. So können beispielsweise darüber hinwegfahrenden Transporteinheiten überwacht werden.

In einer weiteren Ausgestaltung kann zusätzlich oder anstatt eines Schwingungssensors ein Akustiksensor verwendet werden. Das defekte Lager einer Transporteinheit kann nicht nur eine spezifische Schwingung verursachen sondern ggf. auch ein spezifisches Geräusch, welches ausgewertet werden kann, um auf den Verschleiß des Lagers schließen zu können.

In einer Ausgestaltung des Transportweges weist dieser eine erste Überwachungsstrecke auf. Die Überwachungsstrecke ist insbesondere kleiner als der Transportweg. Die Überwachungsstrecke weist einen Anfang und ein Ende auf. Im Bereich der Überwachungsstrecke ist zumindest ein Sensor angebracht. Weist der Transportweg beispielsweise ein Schienensystem auf, so kann dieses aus verschiedenen Einzelschienen zusammengefügt (geschweißt, gesteckt, etc.) sein. Der Abschnitt einer Einzelschiene kann eine Überwachungsstrecke ausbilden.

In einer Ausgestaltung des Transportweges gibt es einen Trigger für den Start und/oder das Ende einer Speicherung der Sensordaten des ersten Sensors auf der ersten Überwachungsstrecke. Damit ist ein Messsystem ausgebildet zur Messung innerhalb definierter Randbedingungen. Das Messsystem besitzt jeweils einen Trigger für Start und Ende einer Aufzeichnung von Schwingungsrohdaten um zum richtigen Zeitpunkt zu messen. Voraussetzung für eine verwertbare Messung ist dabei die Reproduzierbarkeit der Ergebnisse. Transporteinheiten können unterschiedlich schnell sein. Es ist daher ein Abschnitt (eine Überwachungsstrecke) zu wählen, an dem die Transporteinheiten annähernd gleiche oder vergleichbare Geschwindigkeiten aufweisen. Dies kann z.B. in einem Abschnitt sein, an dem die Geschwindigkeit geregelt ist oder die Transporteinheiten durch die Schwerkraft im Auslauf eines Abschnitts annähernd konstant sind. Der Messpunkt, also die Position des Sensors, ist dabei z.B. mittig zwischen Triggersensoren zu platzieren. Ein erster Triggersensor dient dem Start der Messung und ein zweiter Triggersensor dient dem Ende der Messung. Die Triggersensoren betreffen also die Einfahrt der Transporteinheit in die Überwachungsstrecke und die Ausfahrt der Transporteinheit aus der Überwachungsstrecke. Weist der Transportweg zwei Schienen auf, so können an beiden Schienen Schwingungssensoren eingesetzt werden. Die Erfassung der Signale des Sensors oder der Sensoren erfolgt beispielsweise permanent. Die Speicherung der Rohdaten wird insbesondere durch die Trigger ausgelöst. Anschließend wird eine Analyse durchgeführt. Bei einer angenommenen Geschwindigkeit von z.B. ca. 10 m/s und einer Messstrecke von 5 m ergibt sich eine Aufzeichnungsdauer von 0,5 Sekunden. Eine Aufzeichnungsdauer von 0,5 Sekunden ist ausreichend um eine Kennwertberechnung durchzuführen. Der Kennwert ist insbesondere ein Wert, welcher vom Verschleiß der Transporteinheit abhängt.

In einer Ausgestaltung des Transportweges weist dieser eine Transporteinheitenerkennung auf. Aus den Schwingungsrohdaten wird beispielsweise ein Peakwert berechnet und zusammen mit einer Identifizierung der Transporteinheit abgespeichert. Zur Identifizierung der Transporteinheit, d.h. zur Transporteinheitenerkennung, kann beispielsweise ein Barcode, ein QR-Code oder ein RFID-Chip verwendet werden, welcher sich jeweils auf der Transporteinheit befindet.

In einer Ausgestaltung des Transportweges weist die Transporteinheitenerkennung einen Barcodeleser, einen QR-Codeleser und/oder einen RFID-Leser auf. So kann während der Messung eine individuelle Identifizierung der Transporteinheit erfolgen.

Das System zur Überwachung kann sich z.B. auch selbst anlernen, um so Einflüsse der Geschwindigkeit und Beladung der Transporteinheiten zu kompensieren. Ein Anlernen erfolgt z.B. über eine Mittelwertbildung aller Messwerte. Die Bewertung der Ergebnisse erfolgt anhand angelernter statischer Grenzen.

Die Messung des Sensors für insbesondere eine Vibration bzw. Schwingung kann durch verschiedene Faktoren beeinflusst werden. Ein Einflussfaktor ist die Geschwindigkeit und ein anderer eine Beladung der Transporteinheit. Eine unterschiedliche Geschwindigkeit als Störgröße kann über geschickte Wahl der Messstrecke (Überwachungsstrecke) zumindest teilweise eliminiert werden. Eine unterschiedliche Beladung und somit Gewicht der Transporteinheit kann zu einer Varianz der Ergebnisse führen. Dieser Einfluss kann vernachlässigbar sein, wenn der indirekte Messort an einer varianzarmen Stelle gelegt ist und/oder das Gewichtsverhältnis der Einheit zum Transportgut varianzarm ist. Die Räder von Transporteinheiten sind beispielsweise aus einem Material mit niedriger Grenzfrequenz (z.B. Polyethylen - wenige hundert Hz). So können höherfrequente Störeinflüsse von selbst herausgefiltert werden. Ist das Transportgut im Verhältnis zur Transporteinheit wesentlich leichter, kann eine Stabilität des fahrenden Konstrukts gewährleistet werden. Damit braucht eine unterschiedliche Beladung einer Transporteinheit keinen allzu großen Einfluss auf das Gesamtgewicht haben.

In einer Ausgestaltung des Transportweges weist dieser einen zweiten Sensor zur Gewichtsmessung der Transporteinheit auf. Dies ist insbesondere dann vorteilhaft, wenn das Gewicht der Transporteinheit bzw. das Gewicht des Transportgutes nicht vernachlässigbar ist und somit durch dessen Erfassung in der Analyse der Daten des ersten Sensors (insbesondere ein Vibrationssensor) mit berücksichtigt werden kann.

In einer Ausgestaltung des Transportweges ist der erste Sensor ein Schwingungssensor, der insbesondere auch Vibrationen aufnehmen kann.

In einer Ausgestaltung des Transportweges weist dieser einen dritten Sensor zur Messung der Geschwindigkeit der Transporteinheit auf. Auch die Geschwindigkeitswerte können zur Überwachung des Lagers herangezogen werden.

In einer Ausgestaltung des Transportweges ist der erste Sensor mittig in der ersten Überwachungsstrecke positioniert. So kann erreicht werden, dass vom Anfang dieser Überwachungsstrecke bis zur Sensorposition ähnlich viele Sensorwerte aufgenommen werden, wie von der Sensorposition bis zum Ende dieser Überwachungsstrecke.

In einer Ausgestaltung des Transportweges weist dieser eine Schiene zur Befahrung mit der Transporteinheit auf. Die Transporteinheit kann sich beispielsweise auf der zumindest einen Schiene oder unter der zumindest einen Schiene oder neben der zumindest einen Schiene bewegen.

In einer Ausgestaltung des Transportweges weist dieser eine zweite Überwachungsstrecke auf, wobei die erste Überwachungsstrecke insbesondere eine von der zweiten Überwachungsstrecke unterschiedliche Steigung und/oder Krümmung aufweist. So ist es möglich eine Transporteinheit in unterschiedlichen Positionen mit unterschiedlichen Randbedingungen zu überwachen, um so insbesondere noch eine bessere Verschleißerkennung zu erhalten.

Nach einem Verfahren zur Überwachung des Verschleißes einer Transporteinheit wird ein Transportweg mit einem ersten Sensor überwacht. Durch die Überwachung des Transportweges mit dem ersten Sensor ist es möglich, von den während der Fahrt der Transporteinheit auf dem Transportweg aufgenommenen Sensordaten auf den Zustand der Transporteinheit zu schließen. Ein Zustand der Transporteinheit ist beispielsweise deren Verschleiß, welcher beispielsweise durch den Verschleiß eines Lagers der Transporteinheit hervorgerufen wird bzw. ist.

In einer Ausgestaltung des Verfahrens erfolgt die Messung durch den jeweiligen Sensor, also die Erfassung der Signale permanent. Die Speicherung der Signale, welche Rohdaten darstellen, wird beispielsweise durch einen Trigger ausgelöst und durch einen Trigger beendet. Anschließend wird eine Analyse durchgeführt. Bei einer angenommenen Geschwindigkeit von ca. 10 m/s und einer Messstrecke von 5 m ergibt sich eine Aufzeichnungsdauer von 0,5 Sekunden. In einer Ausgestaltung des Verfahrens ist die Aufzeichnungsdauer größer 0,3 Sekunden und kleiner 1 Sekunde. So können in vielen Anwendungsfällen von Fördersystemen, wie Gepäckförderanlagen oder Paketförderanlagen, Daten in ausreichender Menge aufgezeichnet werden um eine Analyse vorzunehmen ohne dass die Datenmenge zu groß wird um eine schnelle und/oder kostengünstige Verarbeitung der Rohdaten zu ermöglichen.

In einer Ausgestaltung des Verfahrens ist für eine Analyse eine Aufzeichnungsdauer von 0,5 Sekunden ausreichend. Mit Daten aus einer Aufzeichnungsdauer von 0,5 Sekunden kann bereits eine Kennwertberechnung durchgeführt werden. Aus den Schwingungsrohdaten wird beispielsweise ein Peakwert berechnet und zusammen mit einer Identifizierung der Transporteinheit abgespeichert. Das System zur Überwachung einer Transporteinheit oder einer Vielzahl von Transporteinheiten kann sich z.B. auch selbst anlernen, um so Einflüsse der Geschwindigkeit und Beladung der Einheiten zu kompensieren. Ein Anlernen erfolgt z.B. über eine Mittelwertbildung aller Messwerte. Die Bewertung der Ergebnisse erfolgt insbesondere anhand angelernter statischer Grenzen.

Auf die Messung durch den Sensor kann eine Störgröße Einfluss nehmen. Beispiele für Störgrößen sind die Geschwindigkeit und/oder die Beladung der Transporteinheit. Eine unterschiedliche Geschwindigkeit als Störgröße kann über eine dedizierte Wahl der Messstrecke eliminiert werden. So kann der Aufbau des Messsystems einen positiven Einfluss auf die Qualität der gemessenen Werte haben. Eine unterschiedliche Beladung und somit Gewicht der Transporteinheit kann zu einer Varianz der Ergebnisse führen. Dies hängt aber vom Messumfeld ab. Ist das Transportgut zu einer leeren Transporteinheit vergleichsweise leicht (kleiner 20%), so kann der Einfluss der Beladung ggf. vernachlässigt werden. Eine Vernachlässigung von Störgrößen ist also beispielsweise durch den indirekten Messort und das Gewichtsverhältnis der Transporteinheit zum Transportgut begünstigt.

In einer Ausgestaltung des Verfahrens werden Sensordaten des ersten Sensors verarbeitet und ein Wert ermittelt, welcher vom Verschleiß der Transporteinheit abhängt. Dieser Wert ist beispielsweise ein Peakwert (Maximalwert) und/oder ein "Peak to Peak Wert" (Betrag zwischen Maximalwert und Minimalwert). Auch das Spektrum der Sensordaten nach einer Frequenzanalyse kann ein Wert sein, welcher vom Verschleiß der Transporteinheit abhängt. Ein weiterer Wert kann ein quadratischer Mittelwert der Sensordaten sein.

In einer Ausgestaltung des Verfahrens wird bei der Ermittlung des Wertes für den Verschleiß das Gewicht der Transporteinheit berücksichtigt. Dabei kann die Transporteinheit ein Transportgut aufweisen oder frei von einem Transportgut sein.

In einer Ausgestaltung des Verfahrens wird bei der Ermittlung des Wertes für den Verschleiß die Geschwindigkeit der Transporteinheit, während der Messung, Vibration und/oder Schwingung berücksichtigt.

In einer Ausgestaltung des Verfahrens wird die Transporteinheit identifiziert. So kann für eine oder eine Vielzahl von Transporteinheiten deren individueller Verschleißzustand über Tage, Wochen, Monate und/oder Jahre überwacht werden. Überschreitet der Wert für den Verschleiß eine vorgegebene Schwelle einmal oder mehrfach, so kann eine Reparatur oder ein Austausch der Transporteinheit vorgenommen werden.

In einer Ausgestaltung des Verfahrens werden die zu verarbeitenden Sensordaten beschränkt. Dies gelingt beispielsweise dadurch, dass nur Sensordaten zur Verarbeitung gespeichert werden, wenn sich die Transporteinheit innerhalb einer vorgegebenen Überwachungsstrecke (Messstrecke) befindet. Durch die Reduzierung der Daten wird der Rechenaufwand verringert.

In einer Ausgestaltung des Verfahrens werden die Werte zum Verschleiß der Transporteinheit unter Berücksichtigung unterschiedlicher Gewichte verglichen. Ist die Transporteinheit individualisiert, so kann beispielsweise eine Transporteinheit mit einem erhöhten Verschleißwert nur noch zum Transport von Transportgütern geringen Gewichts (insbesondere kleiner 50% des Transportgutgewichtes bei einer verschleißfreien Transporteinheit) vorgesehen werden.

In einer Ausgestaltung des Verfahrens werden Werte der Transporteinheit unter Berücksichtigung unterschiedlicher Geschwindigkeiten verglichen. So kann festgestellt werden, ob bei bestimmten Geschwindigkeiten Resonanzen auftreten.

In einer Ausgestaltung des Verfahrens wird als Transportweg der einer Gepäckförderanlage eines Flughafens verwendet. Durch eine Überwachung des Verschleißes kann eine hohe Verfügbarkeit der Gepäckförderanlage erreicht werden.

In einer Ausgestaltung des Verfahrens wird zur Durchführung des Verfahrens einer der beschriebenen Transportwege verwendet.

Nachfolgend ist die Erfindung anhand von Ausführungsbeispielen exemplarisch beschrieben. Dabei zeigt:
- FIG 1: einen Transportweg mit einer Transporteinheit;
- FIG 2: Sensordaten ohne Transporteinheit auf einer Überwachungsstrecke;
- FIG 3: ein Spektrum der Sensorwerte ohne Transporteinheit auf der Überwachungsstrecke;
- FIG 4: Sensorwerte mit Transporteinheit auf der Überwachungsstrecke;
- FIG 5: Spektrum der Sensorwerte mit Transporteinheit auf der Überwachungsstrecke;
- FIG 6: Kennlinien für Werte zur Verschleißerkennung;
- FIG 7: ein Überwachungssystem;
- FIG 8: Sensordaten einer ersten Transporteinheit auf einer ersten Überwachungsstrecke;
- FIG 9: Sensordaten einer zweiten Transporteinheit auf einer zweiten Überwachungsstrecke;
- FIG 10: einen Transportweg mit einer Vielzahl von Transporteinheiten
- FIG 11: eine Transporteinheit mit einem QR-Code, und
- FIG 12: ein Rad-Schienensystem für eine Transporteinheit.

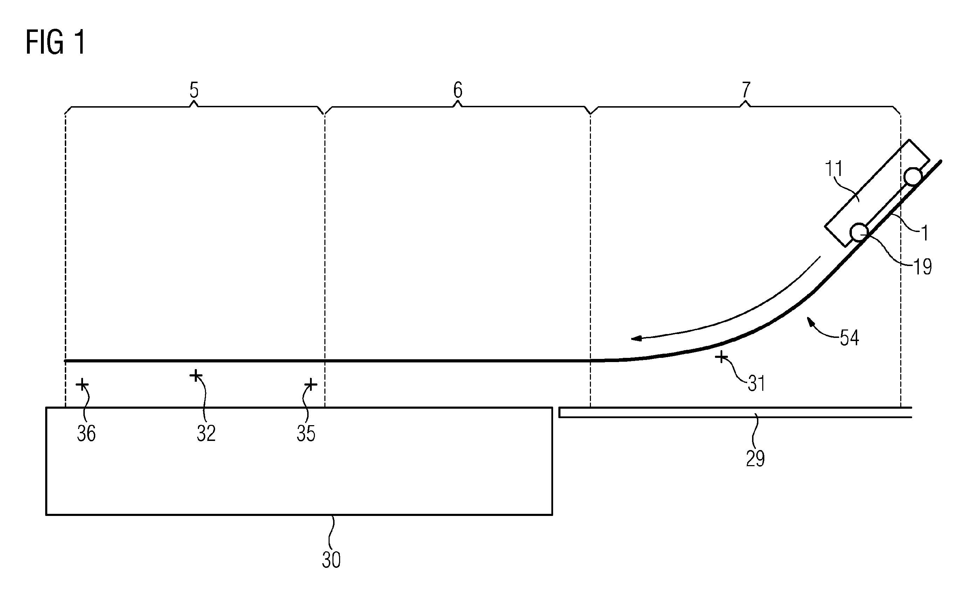

Die Darstellung nach FIG 1 zeigt einen Transportweg 1 mit einer Transporteinheit 11. Der Transportweg 1 weist eine erste Überwachungsstrecke 5, eine zweite Überwachungsstrecke 6 und eine vierte Überwachungsstrecke 7 auf. Die erste Überwachungsstrecke 5 und die zweite Überwachungsstrecke 6 sind Geraden. Die dritte Überwachungsstrecke 7 ist ein Gefälle 54. Die erste Überwachungsstrecke 5 und die dritte Überwachungsstrecke 7 sind aktiv und weisen Sensoren 31, 32 auf. Die zweite Überwachungsstrecke 6 ist im vorliegenden Beispiel inaktiv, weist also keinen Sensor auf. Der dritten Überwachungsstrecke 7 ist ein erster Sensor 31 zugeordnet, welcher insbesondere ein Vibrationssensor ist. Die dritte Überwachungsstrecke 7 ist auf einer Gitterstruktur 29 montiert, welche nicht so starr ist wie ein Betonfundament 30, auf welchem die erste Überwachungsstrecke 5 montiert ist. Der ersten Überwachungsstrecke 5 ist der zweite Sensor 32 zugeordnet, welcher insbesondere ein Vibrationssensor ist. Die Sensoren 31 und 32 befinden sich etwas in der Mitte der Überwachungsstrecken 5 und 7. Fährt nun die Transporteinheit 11 das Gefälle 54 herunter, so nimmt der erste Sensor 31 Sensordaten auf. Die Transporteinheit 11 überfährt danach die inaktive zweite Überwachungsstrecke 6 und fährt in die erste Überwachungsstrecke 5 ein. Diese Einfahrt wird von einem ersten Trigger 35 registriert. Durch dieses Triggersignal des ersten Triggers wird die Aufzeichnung der Sensorsignale des zweiten Sensors 32 gestartet. Das Ausfahren der Transporteinheit 11 aus der ersten Überwachungsstrecke 5 wird von einem zweiten Trigger 36 registriert. Durch dieses Triggersignal des zweiten Triggers wird die Aufzeichnung der Sensorsignale des zweiten Sensors 32 beendet. Die aufgezeichneten Signalwerte werden ausgewertet, um auf den Verschleiß der Transporteinheit 11 zu schließen.

Der dargestellte Transportweg 1 ist beispielsweise ein Teil einer Gepäckförderanlage eines Flughafens. Die Transporteinheit 11 ist dann insbesondere zum Transport eines Gepäckstückes vorgesehen, wobei die Transporteinheit 11 auf zwei Schienen fährt, wobei nach FIG 1 nur eine dargestellt ist.

Die Schienen sind beispielsweise aus Aluminium, wobei die Sensoren zur Schwingungsaufnahme direkt unter der Schiene angebracht sind und der Sensor das Aluminium bzw. Metall der Schiene direkt kontaktiert. Die Transporteinheit 11 kann auch als eine autonome Transporteinheit ausgeführt sein, welche sich beispielsweise auf einer Fläche bewegt ohne durch eine Schiene geführt zu werden. Durch die indirekte Messung der durch die Transporteinheit 11 erzeugten Schwingung, über z.B. die Schiene eines Transportweges, wird nur ein Sensorsystem für den Weg benötigt. Die Transporteinheit 11 bzw. eine Vielzahl von Transporteinheiten benötigen somit hierfür keinerlei Sensorik. Dies stellt eine Einsparung an Hardware- und Installationskosten dar und macht ein solches System wirtschaftlich. Für eine Beurteilung des Zustands, zumindest eines Lagers der Transporteinheit 11, können verschiedenste Kennwerte herangezogen werden, wie z.B.: RMS, Peakwert, Crestfaktor, usw.

Um das Schwingungsverhalten des Transportweges besser zu kennen und analysieren zu können, kann anfänglich die Schwingung gemessen und analysiert werden, ohne dass sich Transporteinheiten auf dem Transportweg 1 befinden. Das Schwingungsverhalten des Transportweges 1 selbst kann so später herausgefiltert werden.

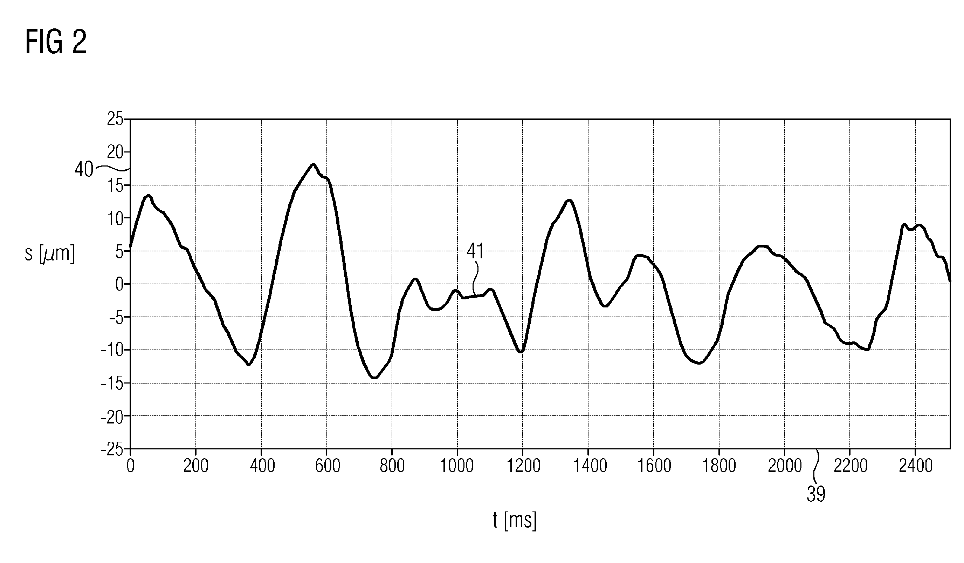

Die Darstellung nach FIG 2 zeigt Sensordaten 41 ohne dass sich eine Transporteinheit auf einer Überwachungsstrecke befindet. Die Sensordaten 41 betreffen eine Auslenkung in µm auf der Ordinate über der Zeit in ms auf der Abszisse 39. Ohne eine Transporteinheit sind die gemessenen Amplituden gering.

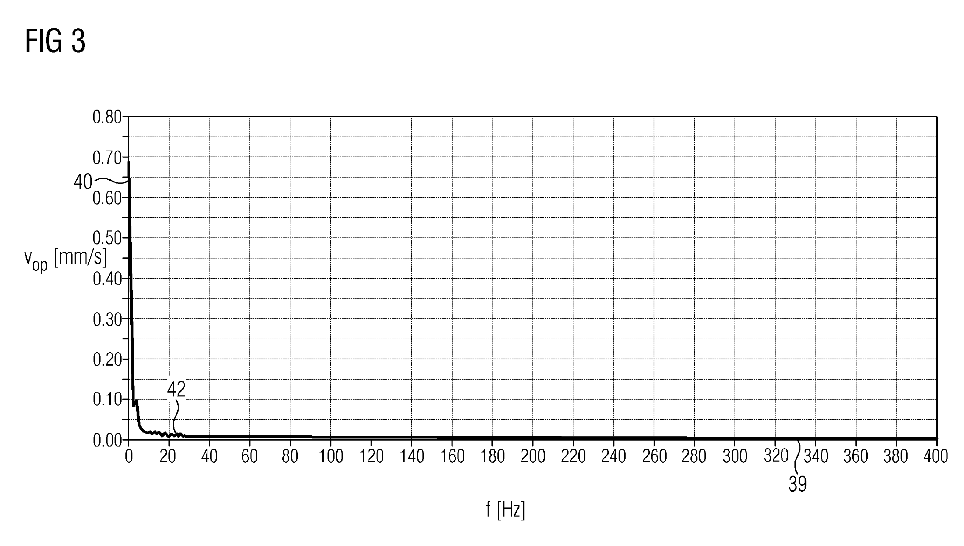

Die Darstellung nach FIG 3 zeigt den zu den Sensordaten 41 aus FIG 1 zugehörigen Frequenzgang 42. Es herrschen Frequenzen zwischen 1Hz und 10Hz vor. Charakteristische Werte wie RMS=0,2mm/s, 0-pk 0,68 mm/s (Max-Wert) und peak-peak 1,2 mm/s (Min-Max-Wert) sind auch gering. Dies zeigt, dass im vorliegenden Beispiel der Weg selbst keinen großen Einfluss auf Vibrationen hat.

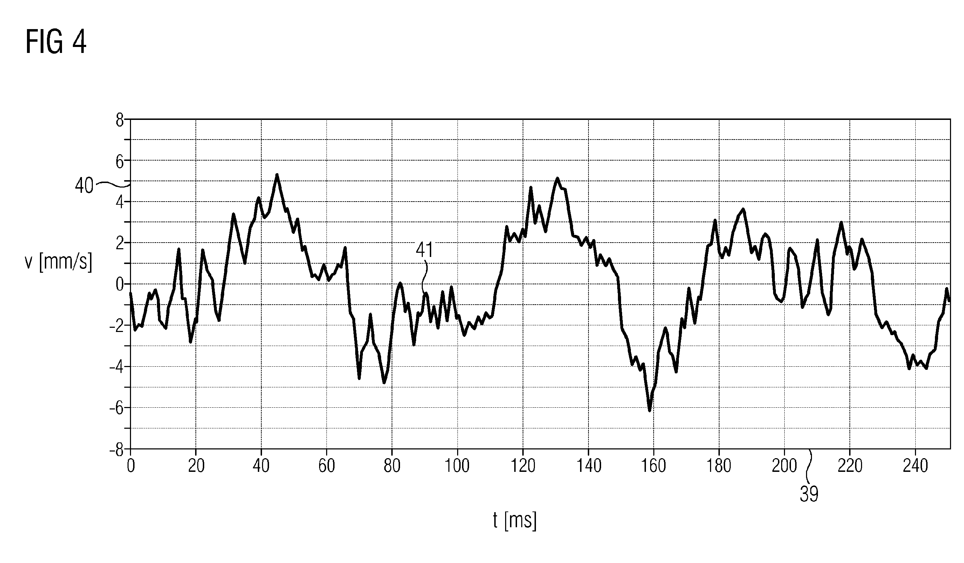

Die Darstellung nach FIG 4 zeigt Sensorwerte 41 mit einer Transporteinheit auf dem Weg, also auf der Überwachungsstrecke. Die Amplituden sind im Vergleich zur Darstellung nach FIG 2 höher. Auch zeigt sich ein anderes Spektrum.

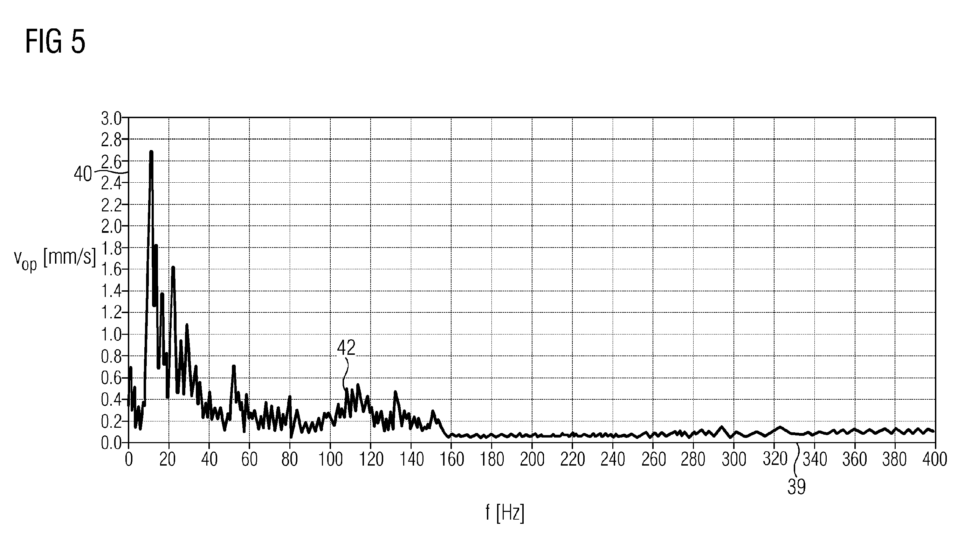

Die Darstellung nach FIG 5 zeigt das Spektrum, also den Frequenzgang der Sensordaten 41 nach FIG 4. Der Frequenzgang 42 hat sich zu höheren Frequenzen bis 100Hz verschoben. Dieser Frequenzgang kann nun beispielsweise zur Verschleißerkennung herangezogen werden.

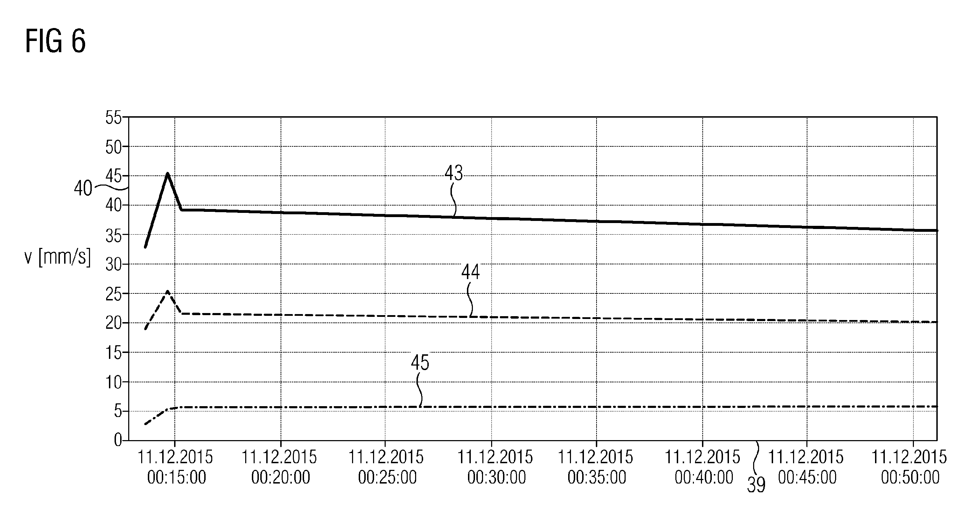

Die Darstellung nach FIG 6 zeigt Kennlinien 43, 44 und 45 Kennlinien für Werte zur Verschleißerkennung. Die Kennlinien 43, 44 und 45 lassen sich aus den Sensordaten errechnen. Die Kennlinie 43 zeigt den Minimal-Maximal-Wert (Min-Max), welcher auch als Peak-Peak-Wert bezeichnet wird. Die Kennlinie 44 zeigt den Maximalwert, auch Peak-Wert genannt. Die Kennlinie 45 zeigt das quadratische Mittel, auch RMS-Wert genannt. Der Verlauf der jeweiligen Kennlinie lässt auf den Verschleiß schließen. Welche Kennlinie zur Verschleißerkennung am optimalsten geeignet ist, kann auch von der Anlage abhängen. Nach FIG 6 erscheint der Peak-Peak-Wert für die betrachtete Anlage das stärkste Signal für eine Verschleißerkennung zu liefern.

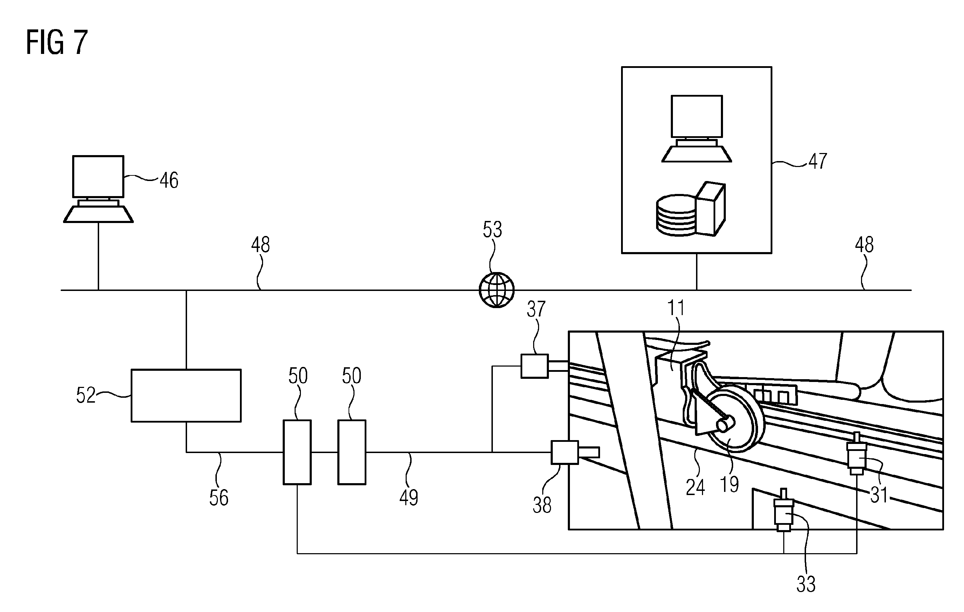

Die Darstellung nach FIG 7 zeigt ein Überwachungssystem für eine Transporteinheit 11 mit einem ersten Rad 19 auf einer Schiene 24. Ein erster Sensor 31 und ein dritter Sensor 33 sind in Kontakt mit zumindest einer Schiene 24. Eine erste Transporteinheitenerkennung 37 und eine zweite Transporteinheitenerkennung 38 zur Identifizierung einer Transporteinheit sind über einen Feldbus 49 mit I/O-Modulen 50 verbunden. Zusätzlich kann noch ein Akustiksensor vorgesehen sein, welcher in FIG 7 jedoch nicht dargestellt ist. Mit diesen I/O-Modulen 50 sind auch der erste Sensor 31 und der dritte Sensor 33 verbunden. Über einen IEEE 1394 Bus 56 wird ein Server 52 zum Condition Monitoring mit den Daten der I/O-Module 50 versorgt. Der Server 52 übermittelt Daten über ein Ethernet, insbesondere über eine https-Verbindung) an eine lokale Bedieneinrichtung 46 beispielsweise in einem Condition Monitoring Raum und/oder über das Internet 53 an eine dezentrale Bedieneinrichtung 47 mit einem Condition Monitoring Server. Die Auswertung der Signale der Sensoren erfolgt lokal und/oder dezentral. Zur Übermittlung der Daten wird beispielsweise eine VPN-Verbindung genutzt. Die Überwachung, also das Monitoring, betrifft insbesondere eine Vielzahl von Geräten, ein Alarmmanagement, das Versenden von Alarm-SMS oder Alarm-Emails, die Verwaltung einer Liste von aufgezeichneten Ereignissen und/oder eine Online-Überwachung von Anlagendaten. Die Überwachung erfolgt vorzugsweise in Echtzeit, um schnell auf einen zu hohen Verschleiß und/oder einen plötzlich auftretenden Fehler (z.B. einen Achsbruch bei einer Transporteinheit) reagieren zu können. Durch das Condition Monitoring wird beispielsweise der Peak-Peak-Wert ausgewertet und z.B. eine Warnmeldung, eine Wartungsmeldung, eine Alarmmeldung, etc. generiert und z.B. über eine optische Nutzerschnittstelle angezeigt. In einer Ausgestaltung kann auch der Trend des Verschleißes gespeichert und ausgewertet werden. Für die Auswertung kann den Signalen und Werten auch jeweils ein Zeitstempel zugeordnet werden.

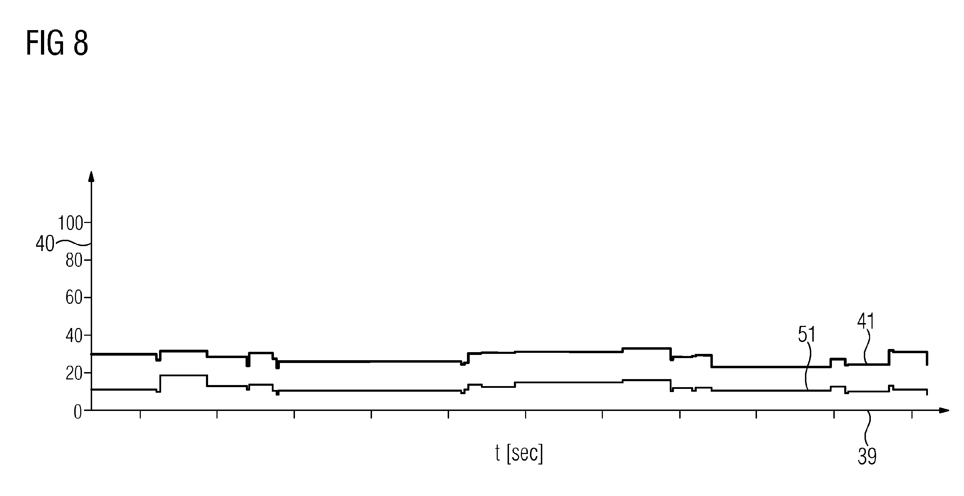

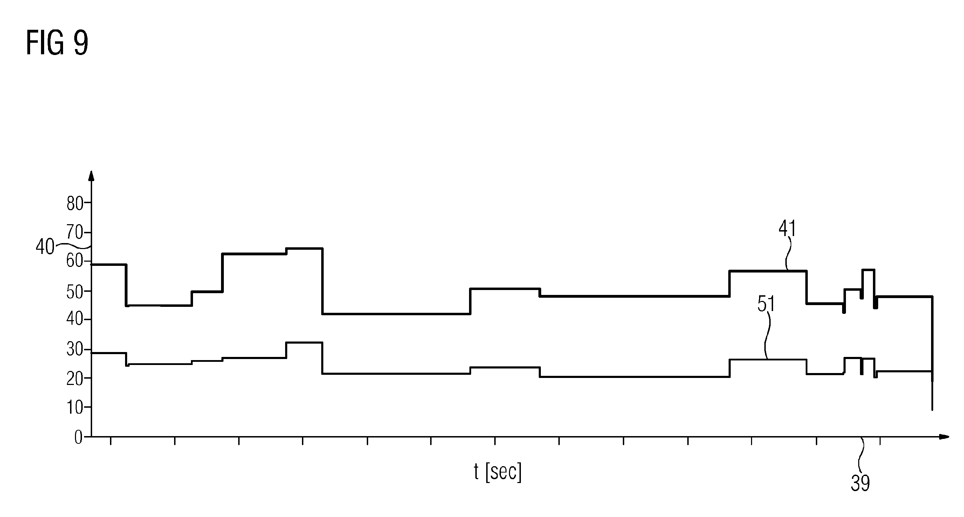

Die Darstellung nach FIG 8 zeigt Sensordaten 41 von einem ersten Sensor und Sensordaten 51 von einem zweiten Sensor einer ersten Transporteinheit auf einer ersten Überwachungsstrecke. Die Darstellung nach FIG 9 zeigt Sensordaten 41 vom ersten Sensor und Sensordaten 51 vom zweiten Sensor der ersten Transporteinheit auf der ersten Überwachungsstrecke wie in FIG 8, jedoch bei einem höheren Verschleiß. Durch den höheren Verschleiß sind die Kurvenverläufe zwischen FIG 8 und FIG 9 unterschiedlich. Die Amplituden in FIG 9 sind im Vergleich zur FIG 8 größer.

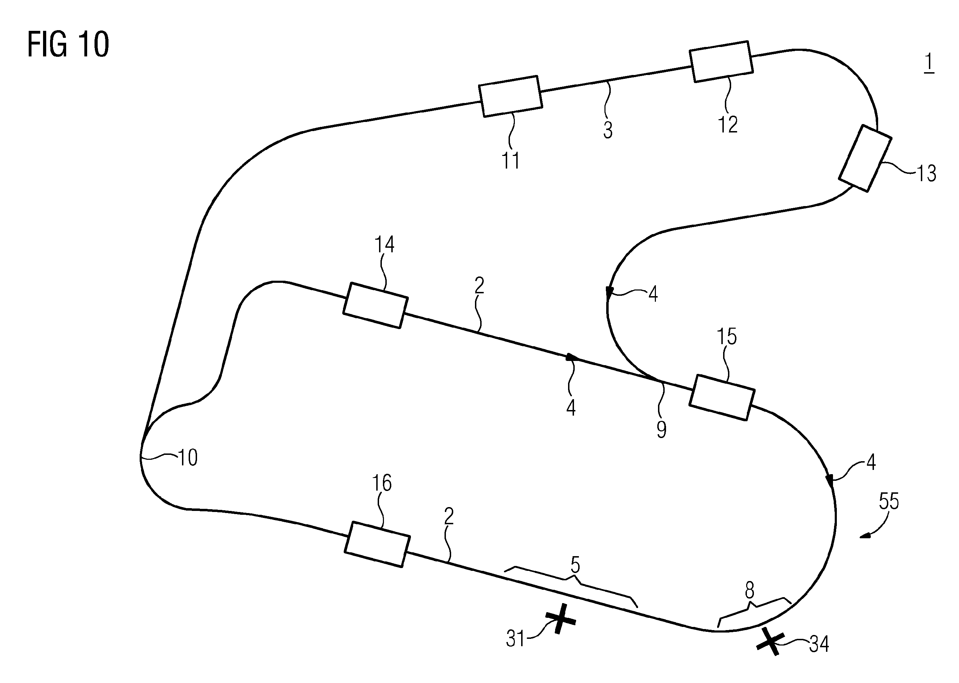

Die Darstellung nach FIG 10 zeigt einen Transportweg 1. Der Transportweg 1 weist einen Hauptweg 2 und einen Parallelweg 3 auf. Der Hauptweg 2 und der Parallelweg 3 sind über eine erste Weiche 9 und eine zweite Weiche 10 miteinander verbunden. Auf dem Hauptweg 2 befinden sich die Transporteinheiten 14, 15 und 16. Auf dem Parallelweg 3 befinden sich die Transporteinheiten 11, 12 und 13. Die Bewegungsrichtung der Transporteinheiten 11, 12, 13, 14, 15 und 16 ist durch Pfeile 4 symbolisiert. Der Hauptweg 2 weist eine erste Überwachungsstrecke 5 und eine vierte Überwachungstrecke 8 auf. Die erste Überwachungsstrecke 5 ist eine Gerade. Mittig auf der ersten Überwachungsstrecke 5 ist ein erster Sensor 31 positioniert. Die vierte Überwachungsstrecke 8 ist in einer Kurve 55. Mittig in der vierten Überwachungsstrecke 8 ist ein vierter Sensor 34 positioniert. Die Sensoren nehmen beispielsweise Vibrationen und/oder Geräusche auf, wobei aus den aufgenommenen Signalen auf einen Verschleiß einer Transporteinheit und insbesondere deren Lager geschlossen werden kann.

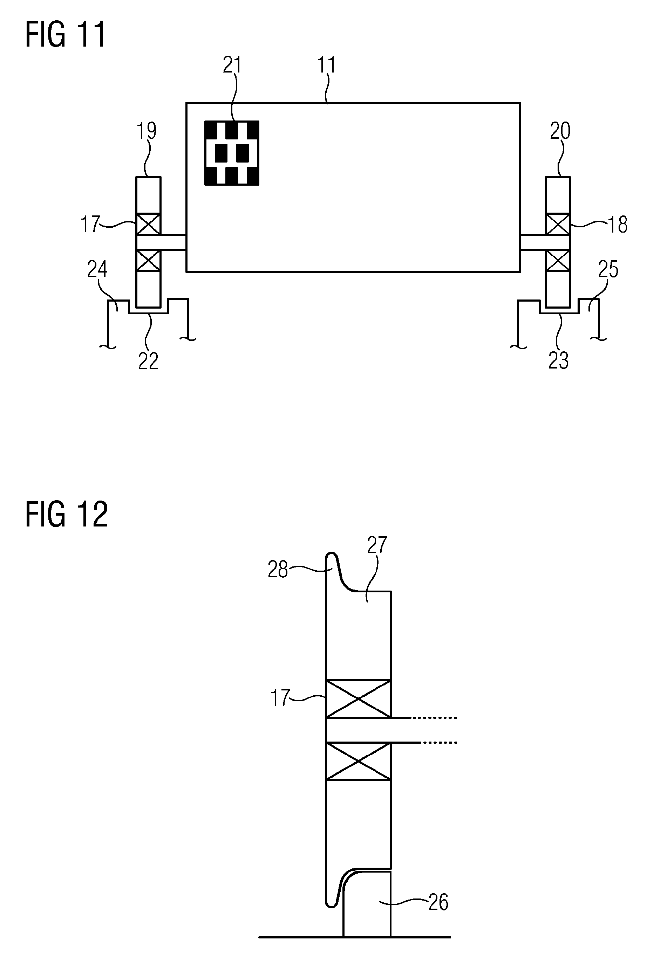

Die Darstellung nach FIG 11 zeigt eine Transporteinheit 11 mit einem QR-Code 21 zur Individualisierung bzw. Identifizierung der Transporteinheit 11. Durch die Individualisierung lässt sich für eine Vielzahl von Transporteinheiten ein individuelles Profil anlegen und deren Zustand festhalten. Sensorsignale können mit einer individuellen Transporteinheit assoziiert werden. Wenn nötig, kann ein Warnsignal oder ein Alarmsignal abgesetzt werden. Die Transporteinheit 11 weist ein erstes Rad 19 mit einem ersten Lager 17 auf und ein zweites Rad 20 mit einem zweiten Lager 18. Die Räder 19 und 20 laufen in Spurrinnen 22 und 23. Die erste Spurrinne 22 für das erste Rad 19 befindet sich in einer ersten Schiene 24 und die zweite Spurrinne 23 für das zweite Rad 20 befindet sich in einer zweiten Schiene 25.

Die Darstellung nach FIG 12 zeigt eine weitere Rad-Schiene Kombination mit einem Rad 27, mit einem Spurkranz 28 und einem Lager 17, wobei das Rad 27 auf einer Schiene 26 geführt ist.

## Patentansprüche

1. Transportweg (1) für eine Transporteinheit (11,12,13,14, 15,16), welche ein Lager (17,18) aufweist, wobei der Transportweg (1) einen ersten Sensor (31) zur Überwachung des Lagers (17,18) aufweist.

2. Transportweg (1) nach Anspruch 1, mit einer ersten Überwachungsstrecke (5).

3. Transportweg (1) nach Anspruch 1 oder 2, mit einem Trigger (35,36) für den Start und/oder das Ende einer Speicherung der Sensordaten des ersten Sensors (31).

4. Transportweg (1) nach einem der Ansprüche 1 bis 3, wobei der Transportweg (1) eine Transporteinheitenerkennung (37,38) aufweist.

5. Transportweg (1) nach einem der Ansprüche 1 bis 4, wobei die Transporteinheitenerkennung (37,38) einen Barcodeleser aufweist.

6. Transportweg (1) nach einem der Ansprüche 1 bis 5, wobei die Transporteinheitenerkennung (37,38) einen QR-Codeleser aufweist.

7. Transportweg () nach einem der Ansprüche 1 bis 6, wobei die Transporteinheitenerkennung (37,38) einen RFID-Leser aufweist.

8. Transportweg (1) nach einem der Ansprüche 1 bis 7, mit einem zweiten Sensor (32) zur Gewichtsmessung der Transporteinheit (11, 12, 13, 14, 15, 16).

9. Transportweg (1) nach einem der Ansprüche 1 bis 8, wobei der erste Sensor (31) ein Schwingungssensor ist.

10. Transportweg (1) nach einem der Ansprüche 1 bis 9, mit einem dritten Sensor (33) zur Messung der Geschwindigkeit der Transporteinheit (11,12,13,14,15,16).

11. Transportweg (1) nach einem der Ansprüche 2 bis 10, wobei der erste Sensor (31) mittig in der ersten Überwachungsstrecke (5) positioniert ist.

12. Transportweg (1) nach einem der Ansprüche 1 bis 11, mit einer Schiene (24,25,26) zur Befahrung mit der Transporteinheit (11, 12, 13, 14, 15, 16).

13. Transportweg (1) nach einem der Ansprüche 1 bis 12, mit einer zweiten Überwachungsstrecke (6), wobei die erste Überwachungsstrecke (5) einer von der zweiten Überwachungsstrecke (6) unterschiedliche Steigung (54) und/oder Krümmung (55) aufweist.

14. Verfahren zur Überwachung des Verschleißes einer Transporteinheit (11,12,13,14,15,16), wobei ein Transportweg (1) mit einem ersten Sensor (31) überwacht wird.

15. Verfahren nach Anspruch 14, wobei Sensordaten des ersten Sensors (31) verarbeitet werden und ein Wert (43,44,45) ermittelt wird, welcher vom Verschleiß der Transporteinheit (11,12,13,14,15,16) abhängt.

16. Verfahren nach Anspruch 14 oder 15, wobei bei der Ermittlung des Wertes (43,44,45) das Gewicht der Transporteinheit (11,12,13,14,15,16) berücksichtigt wird.

17. Verfahren nach einem der Ansprüche 14 bis 16, wobei bei der Ermittlung des Wertes (43,44,45) die Geschwindigkeit der Transporteinheit (11,12,13,14,15,16) berücksichtigt wird.

18. Verfahren nach einem der Ansprüche 14 bis 17, wobei die Transporteinheit (11,12,13,14,15,16) identifiziert wird.

19. Verfahren nach einem der Ansprüche 15 bis 18, wobei die zu verarbeitenden Sensordaten (41,51) beschränkt werden.

20. Verfahren nach einem der Ansprüche 15 bis 19, wobei Werte (43,44,45) der Transporteinheit (11,12,13,14,15,16) unter Berücksichtigung unterschiedlicher Gewichte verglichen werden.

21. Verfahren nach einem der Ansprüche 15 bis 20, wobei Werte (43,44,45) der Transporteinheit (11,12,13,14,15,16) unter Berücksichtigung unterschiedlicher Geschwindigkeiten verglichen werden.

22. Verfahren nach einem der Ansprüche 14 bis 21, wobei als Transportweg (1) der, einer Gepäckförderanlage eines Flughafens verwendet wird.

23. Verfahren nach einem der Ansprüche 14 bis 22, wobei ein Transportweg (1) nach einem der Ansprüche 1 bis 13 verwendet wird.
